# EUROPEAN PATENT APPLICATION

(11) **EP 1 126 276 A2**
(43) Date of publication of application: **22.08.2001**
(21) Application number: 01301044.2
(22) Date of filing: 06.02.2001
(51) Int. Cl.: G01N 27/447

(54) **Separation column containing photopolymer porous matrix and method of packing column**

(30) Priority: 18.02.2000 US 507704
(71) Applicant: The Board of Trustees of The Leland S. Stanford Junior University, Palo Alto, CA 94304 (US)
(72) Inventor: Zare, Richard N., Stanford, California 94305 (US); Dulay, Marai T., Sunnyvale, California 94086 (US); Chen, Jing-Ran, Schaumburg, Illinois 60193 (US)
(74) Representative: Luckhurst, Anthony Henry William

(57) **Abstract**

A separation column is provided that is useful for separating different species in a sample, and comprises a capillary packed with a rigid porous matrix having chromatographic particles embedded in the matrix. The matrix is formed in the bore from photoinitiated polymerization.

## Description

### BACKGROUND OF THE INVENTION

### Field of the Invention

The invention generally relates to separation columns, particularly to relatively large-bore capillary columns containing a porous matrix formed from a photopolymer and embedded with chromatographic particles, and to a method of packing a channel with the matrix to make the column.

### Description of Related Art

Capillary zone electrophoresis (CZE), with its high peak capacity (i.e., the number of peaks separated per unit time), has long been proven to be an attractive analytical technique for separating ionic species by their electrophoretic mobilities. The separation of neutral species via CZE, however, has remained more problematic. To improve the separation of neutral species via capillary electrophoresis, the technique of capillary electrochromatography (CEC) has been employed, which is a promising technique that seeks to combine the advantages of capillary electrophoresis and chromatography as described in the article by Dulay et al. in *Chromatogr. A., 725,* pp. 361-365, 1996.

In CEC, the separation of uncharged analytes is based on partitioning of chromatographic particles such as octadecylsilica, while the separations of charged analytes are based on both partitioning and electrophoretic mobility. Existing techniques for the preparation of packed capillary columns are based on either a slurry packing method or an electrokinetic packing method of small-bore capillary columns. The electrokinetic packing method may be more advantageous than a slurry packing method for the preparation of packed capillary columns with micron-sized inner diameters. Disadvantages of the electrokinetic packing method include the limited choices of chromatographic phases (i.e., only charged particles can be used) and the need for both inlet and outlet frits to prevent the chromatographic particles from leaving the capillary column. This causes the columns to be difficult and time consuming to make.

Peters et al., *Anal. Chem*., *69,* pp. 3648-3649 (1997) note that in order to avoid problems of difficult packing procedures and poor stability beds packed with 2-5 µm particles, thin layers of stationary phases have been chemically bonded to capillary walls; however, they point out that the sample capacities ofthese open tubular capillary columns are very low, and propose as an alternative the use of a rigid continuous macroporous monolith prepared by an *in situ* polymerization. The polymers described are based on methacrylate. The capillary is filled with a polymerization mixture and polymerization is initiated thermally to result in a rigid monolithic porous polymer. Viklund et al., *Chem. Meter., 9,* pp. 469-471 (1997) disclose efforts to develop a photoinitiated *in situ* polymerized system, based on methacrylate, for preparing continuous monolithic sorbents more quickly than with thermally initiated polymerizations.

Nevertheless, it remains desirable to provide separation columns with improved characteristics, that are easy to make, and which are useful in CEC separations.

### BRIEF SUMMARY OF THE INVENTION

One aspect of the invention is directed towards a separation column comprising a separation channel having a channel wall and a separation medium in the channel. The medium includes a porous matrix derived from a photopolymer which has chromatographic particles embedded in the matrix. The channel typically needs no frit adjacent to the separation medium since the porous matrix is rigid and holds the particles therein.

Another aspect of the invention is directed towards a method for making a separation column, comprising introducing a polymeric precursor including a mixture of chromatographic particles into a channel of the column and causing the mixture by irradiation to form a porous matrix with said particles embedded therein.

Practice ofthe present invention is particularly useful in packing large bore (typically 100 microns to about 600 microns) capillary columns which facilitate preparative separation of complex mixtures of charged and/oruncharged compounds by capillary electrochromatography. Advantages of the inventive method include (i) easy and rapid injection ofthe polymeric precursor and particles into the capillary column, (ii) elimination of inlet and outlet frit fabrication, (iii) incorporation of charged or uncharged chromatographic materials in the matrix, (iv) UV transparency of the resulting matrix, (v) potential for automation of many samples, and (vi) potential for large-scale preparative use.

### BRIEF DESCRIPTION OF THE DRAWINGS

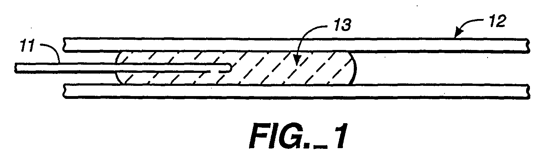

Figure 1 is a partially cross-sectional and partially schematic view of a section of a separation column along a longitudinal axis of the column and of a needle portion of a syringe for injecting a mixture of chromatographic particles and polymeric precursor as a slurry into the column to illustrate a preferred embodiment of the invention.

### DETAILED DESCRIPTION OF THE PREFERRED EMBODIMENTS

There is increasing need for the isolating small amounts (less than 1 µg) of purified components for use as standards or for characterization, especially in the fields related to biology and medicine. It is likely that the materials to be examined in the future are present at even smaller levels in extraordinarily complex mixtures or are too labile to be amenable to conventional methods. The present invention is directed toward the development of apparatus and preparative techniques based upon capillary electrochromatography (CEC).

Fig. 1 is a partially cross-sectional and partially schematic view of a portion of a separation column 12 along a longitudinal axis of the column and a needle portion 11 of a syringe (not shown) injecting a mixture 13 of chromatographic particles and a polymeric precursor as a slurry to illustrate the preferred embodiment of the invention.

Tube 12 can have many different cross-sections, such as a circular cross-section. Alternatively, tube 12 can have an elongated cross-section. These and other cross-sections are possible for tube 12 and are within the scope of the invention. However, in preferred embodiments the internal dimension of tube or channel 12 is a longitudinally extending bore that ranges from about 100 microns to about 600 microns internal diameter, and the tube 12 is a fused-silica capillary the application for which is particularly contemplated in preparative separations of complex mixtures of charged and/or uncharged compounds by capillary electrochromatography.

The sample loading capacity of CEC is proportional to the cross-sectional area of the separation column. Smith and co-workers (Smith, et al., *Tech. Protein Chem*., *3,* pp. 113, 1991) investigated use of larger bore capillaries (150 or 200 µm inner diameter (i.d.)) in capillary electrophoresis (CE). Other approaches that permit larger sample loading capacity include a rectangular cross-section capillary column (Tsuda, et al., *Anal. Chem.,* 62, pp. 2149, 1990), a multicapillary system (Kenny, et al., *Tech. Protein Chem., 4,* pp. 3653, 1992), field amplified sample loading (Burgi, et al., *Anal. Chem.,* 63, pp. 2042, 1991), isotachophoretic sample loading (Mikkers et al., *J*. *Chromatogr.,* 169, pp. 1, 1979), and a concentrator capillary system (Swartz, et al., *J*. *Chromatogr.,* 632, pp. 209, 1993). Each method has its own advantages and disadvantages.

In our studies, we have been using 550 µm i.d., 650 µm outer diameter (o.d.) capillary columns. Compared with 75 µm i.d. capillaries that are commonly used in CE studies, the sample loading capacity increases about 50 times. With these wide-bore capillaries, a significant radial temperature gradient can be formed within the column bore, which in turn results in density gradient and convection. Such convection means sample zone broadening. With the presence of packing particles ODS, the surface-area-to-intemal volume ratio increases significantly. Therefore, it helps to increase heat dissipation and to lower the radial temperature gradient.

The chromatographic particles may comprise uniformly sized particles of the same type, or a mixture of different types of particles of different sizes. Preferably, the particles are of dimensions greater than about 0.2 microns to about 10 microns. The chromatographic particles may be chosen from materials known to have chromatographic properties. For example, particles of octadecylsilica are suitable.

In one embodiment only a portion of the column 12 is filled with the porous matrix with chromatographic particles embedded therein, and the remaining portion of the column is not filled with the matrix. In an arrangement similar to that in prior detection schemes, the separated sample components may be detected optically, such as by laser induced fluorescence as described in U.S. Patent No. 4,675,300 for a column portion that is transparent to radiation. The unfilled portion does not contain any of the chromatographic particles and transmits radiation without significant scattering, such as UV or visible light.

To achieve a more uniform distribution of the chromatographic particles in the matrix, it may be desirable to agitate the mixture while polymerization is occurring within the column 12. This can be done for example by rotating the tube, shaking the tube, or supplying ultrasonic pulses from an ultrasonic source (not shown) in a manner known to those skilled in the art.

With this monolithic packing method, chromatographic materials that are charged and uncharged in nature can be embedded into the matrix. Different functionalized/derivatized precursors can be used to prepare matrices with different physical properties, such as surface charge. The pore size may be selected by choosing an appropriate mixture of precursor components, particularly through the use of porogenic solvents.

The types of polymerization processes that may be used are such as that described in the article "Macroporous Polyacrylamide/Poly(ethylene glycol) Matrixes as Stationary Phases in Capillary Electrochromatography," by Palm et al., *Analytical Chemistry*, *69 (22),* pp. 4499-4507 (1997); or the articles by Righetti et al., in *J*. *Biochem. Biophys. Methods,* No. 4, pp. 347-363 (1981), and by Righetti et al., in *Electrophoresis,* No. 13, pp. 587-595 (1992). As described in these three articles, a porous matrix may be formed by polymerizing a solution of a monomer and a cross-linking reagent or initiator. If said solution is mixed with chromatographic particles and such mixture is used to form the porous matrix with chromatographic particles embedded therein, such matrix may also be used in a separation column for separating a sample into its components in the manner described above. When such a mixture is polymerized, the matrix forms a secure bond to the inner wall of the separation channel so that no frit is necessary to keep the matrix in place. The pores formed are big enough to permit diffusion species but small enough to prevent significant leaching ofthe chromatographic particles trapped therein. The porous matrix without the particles is transparent to radiation where the entire tube is filled with the porous matrix but only a section of the matrix is embedded with chromatographic particles. In this manner, the separated components may be detected downstream from the particles by a detector in a known manner, such as by means of laser induced fluorescence detection. The above-described method for introducing the mixture 13 may also be used for introducing a mixture of the particles with other types of monomers and cross-linking reagents (optional), such as acrylamide or ethylene glycol and an optional base or acid acting as a crosslinking reagent.

A porous matrix (whether or not embedded with particles) may be formed by heating or supplying radiation to a solution of a monomer such as acrylamide or ethyleneglycol and a cross-linking reagent (optional) such as a base or acid to form a macroporous polyacrylamide or poly(ethylene glycol) matrix. The polymerization is achieved thermally or by photochemistry. In reference to the article by Palm et al., since chromatographic particles are used in this invention for sample separation, there is no need in this invention to include alkyl ligands as described in the Palm et al. article. Polymerization techniques different from the above may also be used for forming the porous matrix; such and other variations are within the scope of the invention.

However, the particularly preferred embodiments and preparation in accordance with this invention is by using photoinitiated polymerization of photopolymers, such as methacrylate based monomers, as are known and described, for example, by Viklund et al. However, unlike Viklund et al., chromatographic particles are added to the mixture of monomers, solvents, and a photoinitiator. When polymerization is accomplished by sufficient irradiation, the particles are embedded into the porous matrix. Pore sizes may be in the range of about 1.0 to about 5.0 microns, more preferably about 2.5 microns and 4.0 microns, with particle sizes in the range of about 0.2 microns to about 10 microns.

Another advantage of the present invention is that there is no need to remove the typically polyimide coating from exterior surfaces of the capillaries since the photochemicals used to prepare the matrix can be caused to polymerize at relatively low levels of UV light. Thus capillary outer surface coatings remain intact and the mechanical strength of the column maintained.

Semi-preparative CEC work was carried out using home-made CE instrument. The capillary column (550 µm i.d. and 650 µm o.d.) was packed with 1.5 µm diameter ODS particles using slurry packing method. The frits of these large-bore capillary columns were prepared from a mixture of methacrylate monomers, porogenic solvents, and a photo initiator (Viklund et al.) in the same manner as already described. The running buffer was a mixture of 20% 5 mM phosphate and 80% acetonitrile. The total length of the capillary was 34 cm. The applied voltage across the CEC column was 2 kV. The sample injection volume was 150 nl. Electrochromatograms of Taxol and Baccatin III analysis, respectively, are shown by panels A and B of Figure 4.

While the invention has been described above by reference to various embodiments, it will be understood that different changes and modifications may be made without departing from the scope of the invention, which is to be defined only by the appended claims and the equivalents thereof.

## Claims

1. A separation column, useful for separating different species in a sample, comprising:
a capillary having a longitudinally extending bore; and,
a rigid, porous matrix filling the bore along at least a first longitudinal length, the matrix having chromatographic particles embedded in the matrix, the particles adapted to interact with species in the sample and to cause separation of sample species when passed through the matrix, the matrix formed in the bore from photoinitiated polymerization.

2. The column as in claim 1 wherein the species separated are charged and uncharged.

3. The column as in claim 1 wherein the particles have a diameter of between about 0.2 microns and about 10 microns.

4. The column as in claim 1 wherein a precursor of the matrix includes a methacrylate monomer.

5. The column as in claim 1 wherein the bore has a diameter of about 100 microns to about 600 microns.

6. A method of preparing a monolithic packing in a separation channel, the channel useful for capillary electrochromatography, comprising:
providing a capillary with a longitudinally extending bore and defining a first portion therealong;
introducing a slurry into the first portion of the bore, the slurry including a polymeric precursor and chromatographic particles mixed therein, the polymeric precursor forming a solid, porous matrix via photoinitiated polymerization with the chromatographic particles embedded within the matrix; and
irradiating the slurry.

7. The method as in claim 6 wherein the polymeric precursor includes monomers, porogenic solvents and a photo initiator.

8. The method as in claim 7 wherein the porogenic solvents are selected controllably to form pores in the matrix.
